# EUROPEAN PATENT APPLICATION

(11) **EP 1 837 821 A1**
(43) Date of publication of application: **26.09.2007**
(21) Application number: 07251233.8
(22) Date of filing: 22.03.2007
(51) Int. Cl.: G06Q 20/00

(54) **System and method for E-commerce**

(30) Priority: 24.03.2006 US 785365 P; 05.10.2006 US 539161
(71) Applicant: ESI Entertainment Systems Inc., British Columbia V5H 4M2 (CA)
(72) Inventor: Meeks, Michael, Surrey, BC V4P 3E6 (CA)
(74) Representative: Richardson, Mark Jonathan

(57) **Abstract**

An electronic commerce system for buyers and sellers to transact electronic funds exchange between their respective wallet accounts, the system comprising: a first mechanism for advertising a desire to engage in a sale or purchase transaction of electronic funds; a second mechanism for matching buyers with sellers of the advertised electronic funds; a funds exchange mechanism for transferring transacted electronic funds from a seller to a buyer.

## Description

### CROSS REFERENCE TO RELATED APPLICATIONS

This application claims the benefit of US Provisional application No. 60/785,365 Filed March 24, 2006, the disclosure of which is incorporated herein by reference.

### FIELD OF TECHNOLOGY

The present invention relates to the field of electronic commerce and, more specifically, to a method and system for transferring electronic funds between electronic fund accounts.

### BACKGROUND

Internet based buying and selling of merchandise and services has proliferated. Various forms of payment options have been implemented. For example, wallet systems (also known as stored value systems) provide on-line accounts to subscribers (termed wallet accounts or "e-wallets"), which are available for on-line purchases. Wallet systems maintain positive cash balances for wallet account holders. The term "wallet" is a synonym for "account". Wallet systems typically differentiate between two types of wallets, namely, consumer and merchant. As the names imply, consumer wallets are intended for the general public whereas merchant wallets are intended for online merchants and service providers.

Consumer wallets are easier to obtain than merchant wallets (requiring less identity verification and other vetting) but consumer wallets have lower transfer limits than merchant wallets. Merchant wallets typically provide a programmatic interface (e.g., a web services API) in addition to the web browser interface to which consumer accounts are limited.

One of the limitations of current wallets systems is that they all support merchant-to-consumer transactions (in both directions) but very few support consumer-to-consumer transactions. A consequence of this limitation is that neither intra-wallet system transfers (transfers between consumer wallet accounts within the same wallet system) nor inter-wallet system transfers (transfers between consumer wallets between different wallet systems) are widely supported. Furthermore, competition for users discourages wallet providers from actively providing inter-wallet services.

Generally wallet funds are anonymous in the sense that they do not contain any information identifying the user to the funds, although since the funds are electronic they do incorporate encryption and authentication information to authenticate them to the wallet provider. In many ways wallet funds can be viewed as being equivalent to cash. Consumers may find that they have wallet funds, which they do not intend to use in the near future. The user is left with the option of holding on to these wallet funds until the next transaction or returning them to their wallet and exchanging them for real world funds, without the option to transfer the funds to another user and receive in return payment in real world funds.

Accordingly there is a need for a system and method for wallet account holders, particularly consumer wallet account holders, to dispose of their wallet funds or acquire additional funds. Furthermore, such a system should provide holders with the ability to advertise their desire to acquire or dispose of funds, and which further allows users to have confidence in the funds transfer system.

### SUMMARY OF THE INVENTION

An advantage of the present invention is that it allows wallet account holders to deposit or withdraw funds from their wallet accounts without having to perform a real world funds transfer to or from a wallet system.

A further advantage of the present invention is that it provides a system and method for matching pairs of wallet account holders with complementary purposes (such as a desire for withdrawals or deposits).

A still further advantage of the present invention is that it allows buyers and sellers of to trade with confidence.

In accordance with this invention there is provided an electronic commerce system for buyers and sellers to transact electronic funds exchange between their respective wallet accounts, the system comprising:
a. a first mechanism for advertising a desire to engage in a sale or purchase transaction of electronic funds
b. a second mechanism for matching buyers with sellers of the advertised electronic funds;
c. a funds exchange mechanism for transferring transacted electronic funds from a seller to a buyer.

In accordance with a further embodiment the mechanism for advertising is an online auction system.

In accordance with a still further embodiment the funds exchange mechanism includes transferring transacted funds from a seller's wallet account to a wallet account of the system and transferring equivalent funds from the systems wallet account to the buyers wallet account.

### BRIEF DESCRIPTION OF THE DRAWINGS

Embodiments of the present matter will now be described, by way of example only, with reference to the attached figures, wherein:
FIG. 1 is a schematic diagram of an embodiment of an electronic commerce system according to an embodiment of the present invention;
FIG. 2 shows an architecture of an auction system according to an embodiment of the present invention
FIG. 3 is an activity diagram of a reverse auction according to an embodiment of the present invention;
FIG. 4 is an activity diagram of an end to- end reverse auction with escrow according to an embodiment of the invention;
FIG. 5 is an activity diagram of an English auction according to an embodiment of the present invention;
FIG. 6 is an activity diagram of a full escrow method according to an embodiment of the present invention;
FIG. 7 is an activity diagram of wallet fund escrow system according to an embodiment of the present invention; and
FIG. 8 is an activity diagram of a real world funds escrow method according to an embodiment of the present invention.

### DETAILED DESCRIPTION OF PREFERRED EMBODIMENTS

In the following description like numerals refer to like structures in the drawings.

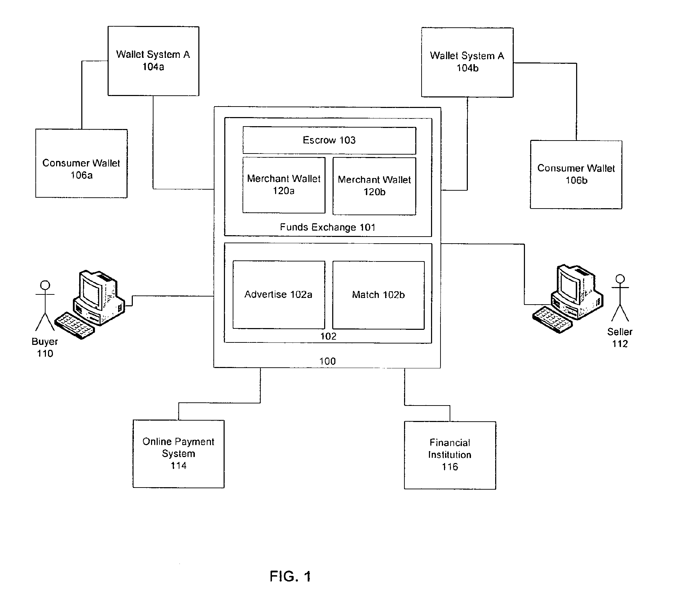

Referring to FIG. 1 there is shown functional blocks of an electronic commerce system 100 according to an embodiment of the present invention. The system 100 interacts with entities such as electronic wallet systems 104, buyers 110, sellers 112, online payment systems 114 and financial institutions 116 to provides a mechanism for buyers 110 and sellers 112 to transact an electronic funds exchange between their respective electronic wallet accounts 106a, 106b. The system 100 comprises a first mechanism 102a for advertising a desire by a buyer or seller to engage in a sale or purchase transaction of electronic funds and a second mechanism 102b for matching buyers with sellers of the advertised electronic funds. The system further includes a funds exchange mechanism 101 for transferring electronic funds from the seller 112 to the buyer 110 once a particular funds transaction has been accepted or concluded. An escrow mechanism 103 may also be provided.

In a preferred embodiment the system is implemented as a Web site on a Web server, which can be accessed, by the entities, such as buyers and sellers from their personal computers via the Internet using their Web browsers. The physical components for implementing such a Web site are well known. In the following description the functions performed by various software components of the system and the exchange of data between thee component will be explained.

In a preferred embodiment buyers and sellers will register with the Web site and provide at least an email address and wallet account details where appropriate. Registered users will be given a unique login identification

Referring back to FIG. 1, the funds exchange mechanism 101 is a software component that interacts with one or more wallet systems 104 (two different wallet systems 104a, 104b are illustrated in this embodiment) which maintains at least one merchant wallet account 120a, 120b from the respective wallet systems 104a, 104b. The particular wallet provider generally dictates the mechanics of setting up and accessing wallet accounts. In a preferred embodiment, the funds exchange is achieved by transferring the transacted funds from the seller's wallet account 106b to the system's 100 merchant wallet account 120b, which corresponds to the seller's wallet system 104b. Equivalent electronic funds are transferred from the system's 100 merchant wallet account 120a to the buyers wallet account 106a. Thus transparent to the buyer and seller, the system 100 is capable of transferring funds between consumer wallet accounts 106a, 106b. As mentioned above the illustrated embodiment shows two different wallet systems thus affecting an inter-wallet transfer. In the case of an intra wallet transfer the transfer of equivalent fund would take place from the same merchant wallet account.

The system 100 may also in conjunction with the escrow mechanism 103 interact with funds clearing providers for clearing online purchase transactions such as a consumer bank 116 or online payment system such as PayPal™ 114 for transferring real world funds from the buyer and sellers, as will be discussed in more detail below.

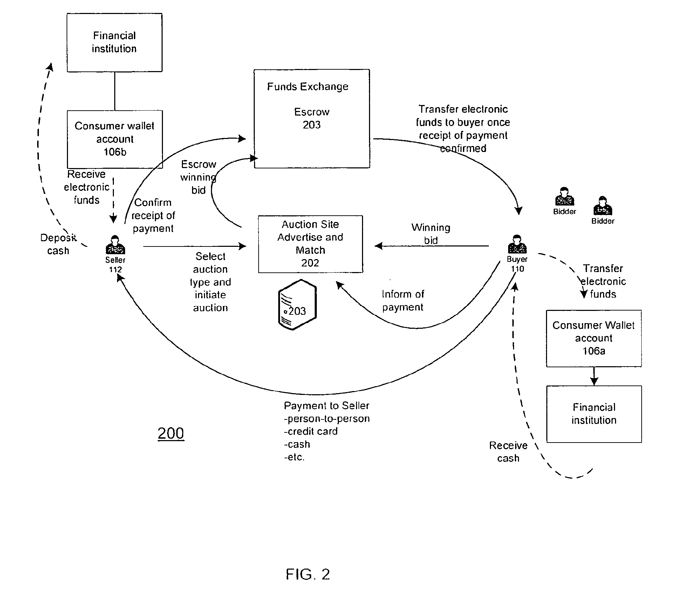

Referring now to FIG. 2 there is shown a preferred embodiment 200 for implementing the ecommerce system 100. In this preferred embodiment, the mechanisms 102 for advertising 102a a sale or purchase and for matching buyers with seller 102b are implemented as a funds auction system. The funds auction system includes an auction site 202 for advertising and conducting an online auction of wallet account funds. The site is typically hosted on suitable servers 203 and accessed via the Internet or suitable network. The auction system facilitates the formation of a potential contract between a seller and buyer and for sellers to transfer electronic funds to buyers in a competitive auction environment with the escrow sub-system holding the auctioned funds in escrow until the contract is completed and then for transferring those funds to the buyer.

The funds exchange may include the escrow subsystem 203 for performing escrow on the funds exchange. Escrow of either or both of the wallet funds and real-world funds may be performed. As mentioned earlier escrow of wallet funds, includes the mechanism to transfer funds between different wallet systems 104a, 104b. That is, the seller's wallet funds do not have to reside on the same wallet system as the buyer's.

The online auction is used to i) sell existing funds in a wallet account, or ii) purchase funds for a wallet account. The system allows both sellers and buyers to initiate the auction process. Different auction types can be used including, but not limited to English Auctions, Reverse (a.k.a. procurement) auctions, Dutch Auctions, Reverse Dutch Auctions or Japanese auctions. The system matches buyers to sellers based on the auction type. Generally, the bidders are proposed to the initiator. The initiator selects zero or one bidder. If the initiator does not select a bidder, the auction is abandoned. If the initiator selects a bidder, the auction continues with the funds exchange. One feature is to allow the initiator to select the candidate, since sometimes the best price is not the best choice if factors such as reputation and locality are factored in. Fund exchange involves transferring wallet funds from the seller to the buyer, and real-world funds from the buyer to the seller.

The auction and funds exchange components of the auction system 202 can be addressed separately. Successful completion of the auction initiates funds exchange. The system 200 supports several auction processes, each of which can be combined with several ways to perform funds exchange. Each auction has an initiator and multiple bidders. Initiators can be buyers who want to deposit funds in their wallet, or they can be sellers who want to withdraw money from their wallet.

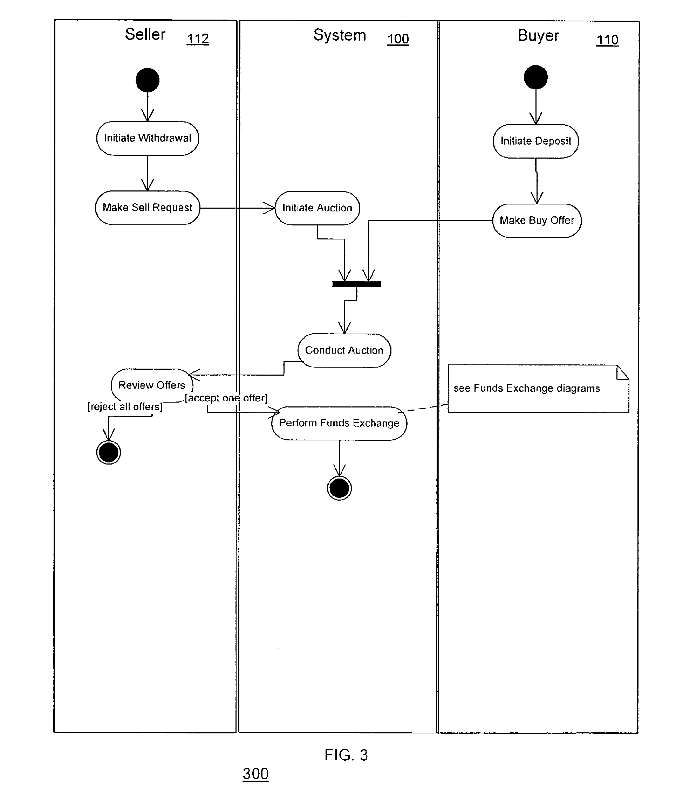

Referring to FIG. 3 there is shown schematically a reverse auction 300 according to an embodiment of the present invention. In a reverse auction, the buyer 110 is the initiator and the sellers 112 are the bidders. The buyer initiates a deposit of funds into the buyer's wallet account. The seller initiates a withdrawal from its wallet account since the seller wants to convert wallet funds to real-world funds. The buyer makes a buy request by creating an auction on the system 202. The auction is initiated by the system posting the auction and inviting sellers to bid. Multiple sellers make offers to sell. They advance the price they willing to sell at. The auction system 202 tracks and posts the sell offers. The buyer reviews the sell offers and picks the best offer. If the buyer 110 rejects all offers, the auction is abandoned. Funds between buyer and seller are exchanged as will be described in more detail below.

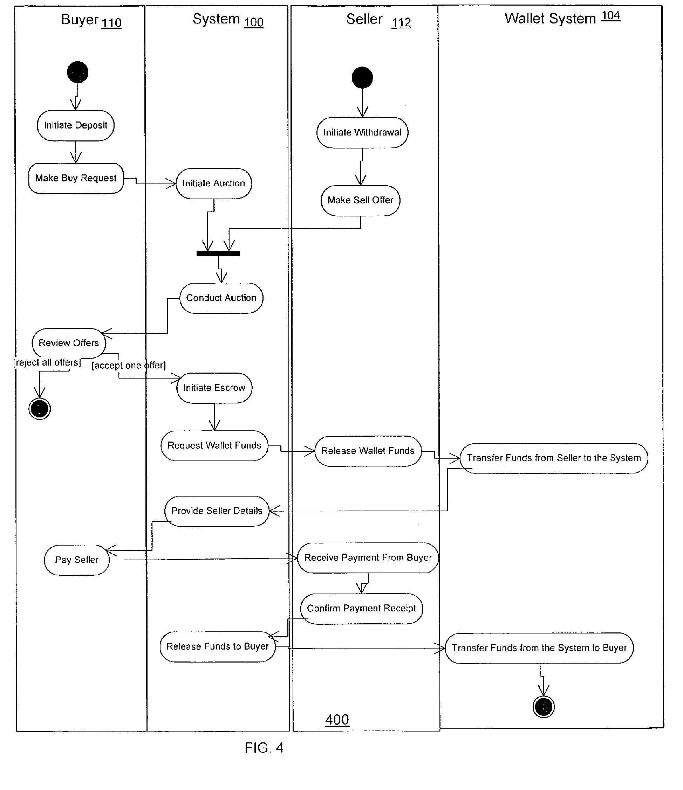

Referring now to FIG. 4 there is shown a method for a buyer-initiated auction (reverse auction) 400 using an escrow for wallet funds only. In the auction 400, the buyer 110 initiates a deposit of wallet funds to the system 200 using his or her wallet system. As in the reverse auction described above, once the auction is conducted the buyer reviews the offers and rather than perform the funds exchange as shown in FIG. 2 above, the auction system 102 initiates an escrow on the funds to be exchanged. In this case the system 102 makes a request for wallet funds to the seller, the seller releases wallet funds which results in the wallet system transferring funds from the seller wallet system to the auction system 102. The auction system provides seller details to the buyer, who in turn pays the seller. When the seller receives payment from the buyer and confirms receipt to the auction system 202, the system 203 releases funds to the buyer resulting in the wallet system transferring funds from the auction system to the buyer.

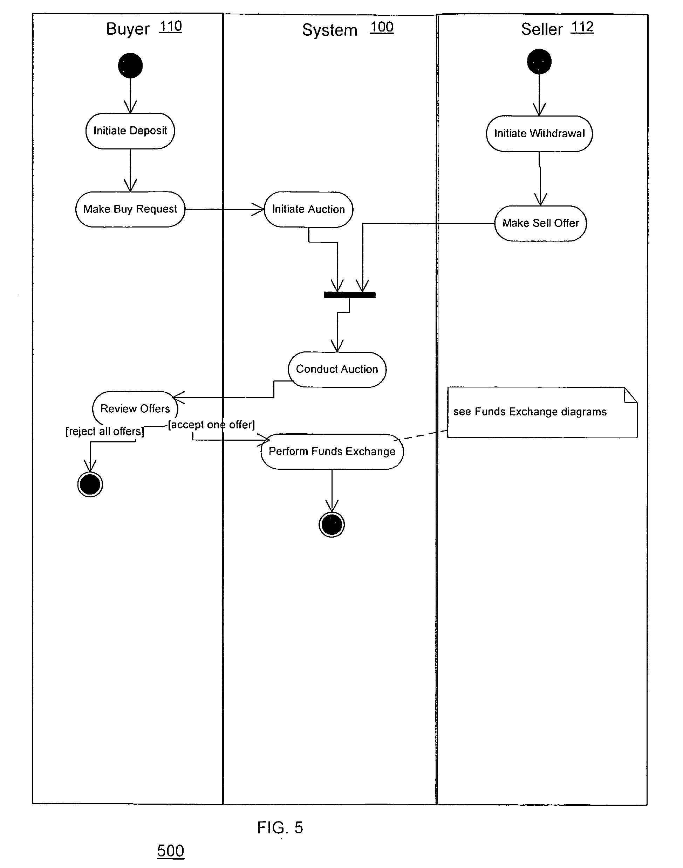

Referring now to FIG. 5 there is shown a schematic diagram 500 of an English auction according to an embodiment of the present matter. In an English auction, the seller is the initiator and the buyers are the bidders. A deposit is initiated. The buyer wants to move funds into the buyer's wallet account. The seller initiates a withdrawal, since the seller wants to convert wallet funds to real-world funds. The seller creates an auction on the system and makes a sell request. An auction is initiated by the system, which posts the auction and invites buyers to bid. Multiple buyers make offers to buy. They provide the price they are willing to buy at. The system tracks and posts the buy offers. The seller reviews the buy offers and picks the best offer. If the seller rejects all offers, the auction is abandoned. Funds between buyer and seller are exchanged as will be described in more detail below.

The system 100 may be used to conduct other auction types, which are variations on the English, and reverse auctions include Dutch, Reverse Dutch and Japanese auctions. These are similar from a process flow perspective. They differ in the mechanics of how the auction is conducted, and how the winning bids are selected.

Funds exchange is explained in more detail below. Funds exchange involves an inter-wallet transfer from the seller to the buyer and a real-world transfer from the buyer to the seller. Each transfer may optionally be performed in escrow with the auction system acting as the escrow agent. The following describes each escrow scenario.

### Full Escrow

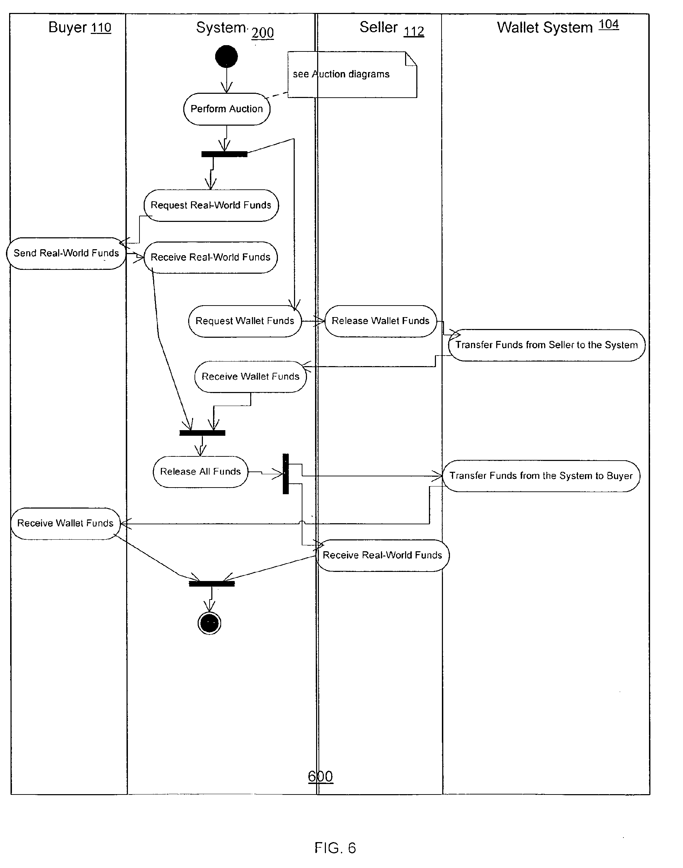

Referring now to FIG. 6 there is shown, generally by numeral 600, a sequence of steps for performing a full escrow of funds by the auction system 102. Once the auction is performed, the system 200 sends a request to the buyer to provide the real-world funds. This is done in parallel to a "Request Wallet Funds". The buyer submits the funds to the system using one of a variety of payment methods including credit card or online payment system such as PayPal™. The system receives the funds from the buyer and requests the seller to place funds from the seller's wallet account in escrow with the auction system. This is done in parallel to "Request Real-World Funds". Once the seller provides authentication information for the seller's wallet account for the transfer of the funds, a release of wallet funds is performed. The wallet system is instructed to move funds from the seller's wallet account to the auction systems account. If the seller is unable to provide the funds, the auction is abandoned. Once the system 200 receives an indication from the wallet system that the wallet funds have been transferred, a release of all funds instruction is issued. Once the system 200 has received both the real-world and wallet funds, the system releases the real-world funds to the seller and the wallet funds to the buyer. The wallet system completes the funds transfer from the system escrow 203 account to the buyer. The transaction completes for the seller once the real world funds are received and the transaction completes for the buyer once the wallet funds are received.

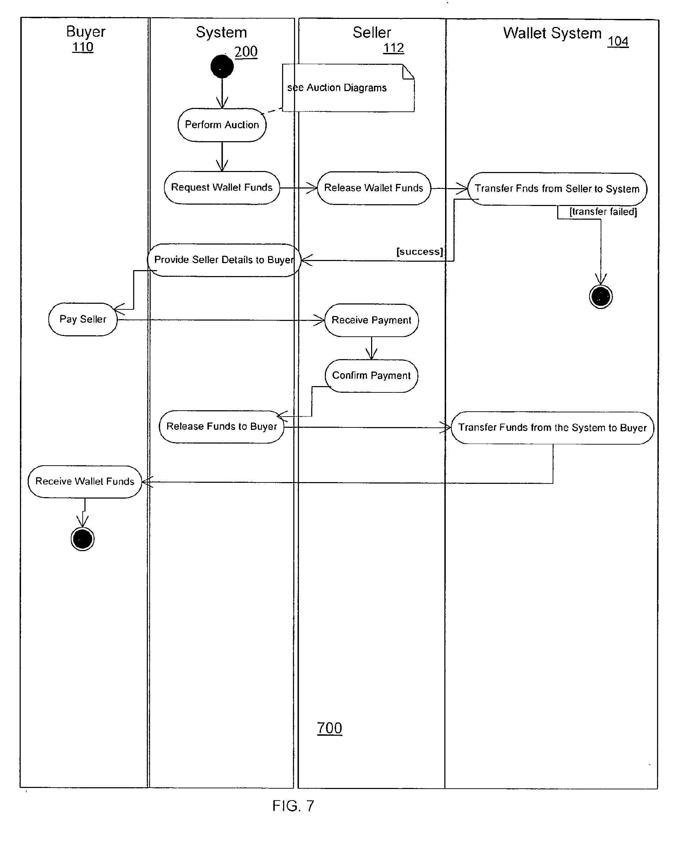

Referring to FIG. 7 there is shown, generally by numeral 700, a sequence of steps for an escrow of only the wallet funds by the system 200. As earlier, after the auction completes, the system requests the seller to place funds from the seller's wallet account in escrow with the system. The seller provides authentication information for the seller's wallet account for the release and transfer of the funds. The wallet system is instructed to transfer funds from the seller's account to the auction system's account. If the seller is unable to provide the funds, the auction is abandoned. Provided that the system 200 has successfully transferred the seller's wallet funds, the system 200 sends the seller's contact information to the buyer. The buyer pays the seller. The real-world funds are transferred using a suitable method such as by cheque, by postal mail or a service such as PayPal™. The seller receives the payment from the buyer and, depending on the transfer method, ensures that the funds have cleared. Once the seller is satisfied that payment has been made, the seller informs the system 200 and confirms payment. The system 200 instructs the wallet system to transfer funds to the buyer. The wallet system completes the funds transfer from the auction system escrow account to the buyer. Once the wallet funds are received the transaction completes for the buyer.

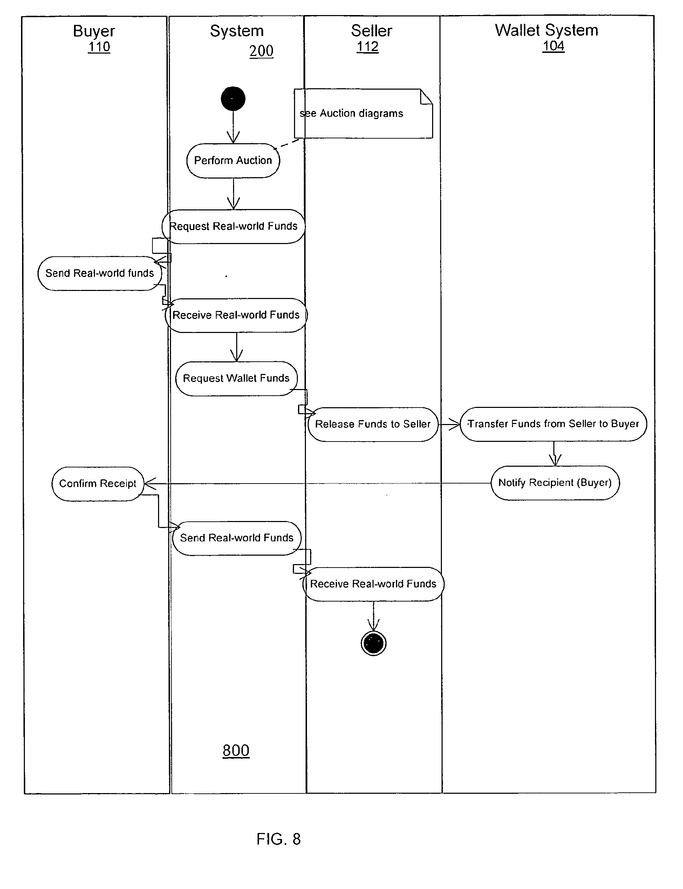

Referring now to FIG. 8, there is shown a sequence of steps for escrow of real-world funds by the system 200. Again, after the auction completes, the system 200 sends a request to the buyer to provide the real-world funds. The buyer submits the funds to the system using one of a variety of payment methods including credit card or PayPal. The system 200 receives the funds from the buyer and instructs the seller to transfer funds from the seller's wallet account to the buyer's wallet account. The wallet system performs the funds transfer. The wallet system sends a confirmation to notify the recipient of the transfer. Some wallet systems may require confirmation from the recipient before allowing the transfer to complete. The buyer informs the system 200 that the wallet funds have arrived. The system 200 sends real-world funds to the seller. Once the real-world funds have been received the transaction completes.

As previously discussed there are several types of auctions for which the present system 200 may be used. For example, an English auction is the generally understood "normal" auction. In the "online" scenario the seller would post an offer for an amount of electronic funds at a specific opening bid. Prospective buyers would then begin to bid on the advertised funds with the price they wish to pay. This type of auction would have time limit on when it would close. At the time of close the buyer with the highest bid is the winner of the advertised funds.

A reverse or procurement auction is used normally in RFP (request for proposal) procurements. In this auction the buyer would post an offer for the need of an amount of electronic funds. Prospective sellers would then begin to bid on that offer indicating how much they are willing to sell for, with the price decreasing. This type of auction would have a time limit on when it would close. At the time of close the seller with the highest bid is the winner.

A Dutch or Chinese Auction is used normally for quick auctions. In this auction the seller would post an offer for an amount of electronic funds at a specific opening bid. Prospective buyers would then begin to bid on that amount of advertised funds with the price they wish to pay. The price of the amount of advertised funds would reduce by a determined increment at an interval. When the advertised funds price drops to meet the highest buyers bid then the auction closes and then the buyer is the winner.

In the reverse form of a Dutch auction a buyer would post an offer for the need of an amount of funds with an opening bid. Prospective sellers would then begin to bid on that amount indicating how much they are willing to sell for. The price of the buyer is willing to pay for the advertised funds would increase by an increment at an interval. When the price increases to meet the lowest sellers offer then the auction closes and then that seller is the winner.

A sealed-bid or Japanese auction is used when competitive bidding is hidden from other prospective winners. This auction is carried out similar to an English "normal" auction however competitive bids are hidden from each other.

In a preferred embodiment, when an initiator begins an auction they will need to provide wallet funds that can be held in escrow. For English auctions, the initiator needs the ability to provide wallet funds when the auction begins. We do not take their tokens until we start escrow after the auction closes. Those tokens will be transferred from the initiator's wallet to the wallet held by the system. The transfer is intra-wallet to help reduce any fees that will be incurred, also all currencies will be held in the format native to the wallet. If a currency conversion needs to occur, that will happen at the completion of the transaction.

A merchant wallet allows the escrow portion of system 200 to have higher fund limits that it can hold. Also the system 200 would be able to use the web service interface to access the wallet.

The system 200 may include the following features:

### Buy Now

When a Seller posts an offer to sell funds, the seller would indicate a price he or she is willing to accept if the buyer would like to be the winner immediately and cause the auction to close.

### Sell Now

When a Buyer posts an offer for the purchase of funds, the buyer would indicate the price he or she is willing to pay to make an immediate sale. If a seller would like to sell now they agree to sell at that price and cause the auction to close.

### That's Enough!

When then initiator of the auction (either the seller or buyer depending on the type of auction) is satisfied with a current bid they can decide to accept the bid and complete the auction.

### Reputation

With limited knowledge about the buyer or seller a participant in the auction could be hesitant to deal with others. The reputation system allows participants to rate other participants they deal with.

Unlike other "online" auction systems the system holds the transacted funds in escrow until the sale is made. The Seller's reputation is tracked by the system.

The reputation of the buyers maybe of concern to the seller, for this reasons the reputation system can allow the seller to view the history of that buyer. Unlike real world auctions the ability maybe given to the seller to select which bid they want to accept.

The ability to limit buyers of only a specific reputation level to participate in a bid, may introduce an interesting dynamic, where participants with lower (or no) reputations make stronger bids to gain reputation. Another implementation is to allow a basic registered reputation if the participant is a registered member of a verified wallet.

### Automated Agents

As with other popular "online" auctions, if reputation is applied then the system 200 gives the initiator of the auction the ability to select their winner. In some cases an initiator will select a bid that is less valuable because the reputation of that bidder is safer. Furthermore an automated agent may be selected to apply different criteria to the Select a Winner process and automate the selection.

As an example a "Best Deal Agent" maybe setup to look for the best deal regardless of reputation. Also a "Well Known Agent" may require the winner to have a minimum level of reputation to be considered.

### Reserve

When the initiator of the auction (either the seller or buyer depending on the type of auction) starts the auction they can indicate if the auction has a reserve. This reserve is the amount of money that a bidder must bid to be considered valid for this auction. If no valid bids are made on an offer the auction will close without a winner.

### Back Office

This system is able to add and remove users, adjust user reputation and blacklist users. Also the system may be able to link a user account to a wallet system and the ability to link a transaction to a user.

For fraud analysis and issue resolution the transaction and user need to be linked to an incident record. The incident record will allow the system to resolve problems with the auction.

While certain features of the matter have been illustrated as described herein, many modifications, substitutions, changes and equivalents will now occur to those skilled in the art. It is, therefore, to be understood that the appended claims are intended to cover all such embodiments and changes as fall within the true spirit of the matter.

## Claims

1. A distributed electronic communications system for communicating electronic fund data between consumer electronic wallets of first and second registered users of the system, the distributed electronic communications system comprising:
an electronic wallet system;
a first and a second user terminal arranged to permit the first and second users respectively to communicate with the electronic wallet system;
the electronic wallet system being arranged to maintain merchant electronic wallets and arranged to communicate with the consumer electronic wallets, merchant and consumer electronic wallets being associated with different respective electronic wallet system security levels, the security level of a consumer electronic wallet being arranged to permit a consumer electronic wallet to exchange electronic fund data with the electronic wallet system and/or a merchant electronic wallet and to prevent the direct transfer of electronic fund data with other consumer electronic wallets; and
an escrow user terminal arranged to be in communication with the electronic wallet system via a first communications network and arranged to have the merchant electronic wallet within the electronic wallet system;
wherein the escrow user terminal is arranged to receive electronic fund data representing an amount of funds for the second user from the first user's consumer electronic wallet and is arranged to transmit electronic fund data representing an equivalent amount of funds to the consumer electronic wallet of the second user.

2. A distributed electronic communications system as claimed in Claim 1, wherein the electronic wallet system is arranged to be in communication with the first and second user terminals via the first communications network.

3. A distributed electronic communications system as claimed in Claim 1, wherein the electronic wallet system is arranged to be in communication with the first and second user terminals via a second communications network, being different to that of the first communications network.

4. A distributed electronic communications system as claimed in any preceding claim, wherein the distributed electronic communications system comprises a single electronic wallet system such that the escrow user terminal and the first and second user terminals are all in communication with the same electronic wallet system, the escrow user terminal being arranged to facilitate the transfer of electronic fund data between registered users.

5. A distributed electronic communications system as claimed in any of Claims 1 to 3, wherein the distributed electronic communications system comprises first and second electronic wallet systems, the first user being registered with the first electronic wallet system and the second user being registered with the second electronic wallet system, the escrow user terminal being in communication with both the first and second electronic wallet systems and arranged to have a first merchant account with the first electronic wallet system and a second merchant account with the second electronic wallet system, the escrow user terminal being arranged to facilitate the transfer of electronic fund data between the first and second users.

6. A distributed electronic communications system as claimed in any preceding claim, wherein the electronic wallet system is arranged to provide registered users of the system with consumer electronic wallets.

7. An electronic commerce system for buyers and sellers to transact electronic funds exchange between their respective wallet accounts, the system comprising:
a. a distributed electronic communications system as claimed in any one of Claims 1 to 6, wherein the one of the first and second users is the seller and the other of the first and second users is the buyer;
b. a first mechanism for advertising a desire to engage in a sale or purchase transaction of electronic funds;
c. a second mechanism for matching buyers with sellers of the advertised electronic funds.

8. An electronic commerce system as defined in Claim 7, wherein the mechanism for advertising is an online auction system.

9. An electronic commerce system as defined in Claim 7, wherein said mechanism for advertising is a Web site.

10. An electronic commerce system as defined in Claim 7, wherein said mechanism for advertising is via email.

11. An electronic commerce system as defined in Claim 7, wherein the distributed electronic communications system is arranged to transfer transacted funds from a seller's consumer electronic wallet to the escrow user terminal's merchant electronic wallet and to transfer equivalent funds from said merchant electronic wallet to the consumer electronic wallet account of said buyer.

12. A method of communicating electronic fund data between electronic wallets of first and second registered users of a distributed electronic communications system, the method comprising:
providing an electronic wallet system;
permitting first and second user terminals belonging to first and second users respectively to communicate with the electronic wallet system, the first and second users each having a consumer electronic wallet;
maintaining merchant electronic wallets within the electronic wallet system;
associating different electronic wallet system security levels with the respective merchant and consumer electronic wallets, the security level of a consumer electronic wallet being arranged to permit a consumer electronic wallet to exchange electronic fund data with the electronic wallet system and/or a merchant electronic wallet and to prevent the direct transfer of electronic fund data with other consumer electronic wallets;
providing an escrow user terminal;
communicating between the escrow user terminal and the electronic wallet system via a first communications network, the escrow user terminal having a merchant electronic wallet within the electronic wallet system;
wherein the method further comprises:
receiving electronic fund data at the escrow user terminal representing an amount of funds for the second user from the first user's electronic wallet
transferring electronic fund data representing an equivalent amount of funds to the electronic wallet of the second user.

13. A method for buyers and sellers to transact electronic funds exchange between their respective electronic wallets, the method comprising the steps of:
a. providing the method according to Claim 12, the seller being one of the first and second users and the buyer being the other of the first and second users;
b. advertising a desire to engage in a sale or purchase transaction of electronic funds;
c. matching buyers with sellers of the advertised electronic funds; and
d. transferring transacted electronic funds from the seller to the buyer.

14. A method as defined in Claim 13, including conducting an auction to advertise said sale or purchase.

15. A method as defined in Claim 13, including transferring transacted funds from a seller's electronic wallet to a merchant electronic wallet of the escrow user terminal and transferring equivalent funds from the merchant electronic wallet to the buyer's electronic wallet.

16. A method as defined in Claim 14, said auction being selected from one of an English auction, a reverse auction, a Dutch auction, a reverse Dutch auction or Japanese auction.

17. A data carrier comprising a computer program arranged to configure a distributed electronic communications system to implement the method according to any one of Claims 12 to 16.
